# EUROPEAN PATENT APPLICATION

(11) **EP 4 461 410 A1**
(43) Date of publication of application: **13.11.2024**
(21) Application number: 23832945.2
(22) Date of filing: 30.05.2023
(51) Int. Cl.: B02C 2/10, B02C 2/00

(54) **CRUSHER**

(30) Priority: 27.03.2023 CN 202320626787 U
(71) Applicant: Contemporary Amperex Technology (Hong Kong) Limited, Central, Central And Western District (HK)
(72) Inventor: YU, Haohua, Ningde, Fujian 352100 (CN); YAN, Haohao, Ningde, Fujian 352100 (CN); CAI, Jiancheng, Ningde, Fujian 352100 (CN); XU, Ganyu, Ningde, Fujian 352100 (CN); CHEN, Guangsheng, Ningde, Fujian 352100 (CN)
(74) Representative: Rowlands, Stuart Michael
(86) International application number: PCT/CN2023/097155
(87) International publication number: WO 2024/198074

(57) **Abstract**

The present application provides a pulverizer, which relates to the technical field of pulverizing devices. The pulverizer includes a support frame, a stator and a rotor. The stator is connected to the support frame and has a stator pulverizing surface. The rotor is connected to the support frame and has a rotor pulverizing surface, and the rotor is rotatable. The stator pulverizing surface is opposite the rotor pulverizing surface, a pulverizing chamber is formed between the stator pulverizing surface and the rotor pulverizing surface, and a distance between the stator pulverizing surface and the rotor pulverizing surface is adjustable. Due to the adjustable distance between the stator pulverizing surface and the rotor pulverizing surface, the distance between the stator pulverizing surface and the rotor pulverizing surface can be adjusted according to the required particle size of materials, so that the pulverizer can produce pulverized materials with different particle sizes, and thus has a wider applicability.

## Description

### Cross Reference

The present application relates to the Chinese patent application No. 202320626787.7, filed on March 27, 2023 and entitled "PULVERIZER", which is incorporated herein by reference in its entirety.

### Technical Field

The present disclosure relates to the technical field of pulverization, and in particular, to a pulverizer.

### Background

A pulverizer is a mechanical device that pulverizes large-sized materials into required sizes. The pulverizer may use the high-speed rotation of pulverizing blades to cut and impact the materials to realize the pulverization of the materials.

The pulverizer includes a stator and a rotor, the materials are located between the stator and the rotor, and the materials are pulverized during rotation of the rotor. In the related art, the pulverizer cannot meet the requirements of different pulverization sizes of materials, and thus has a narrow applicability.

### Summary of The Invention

The present application is intended to solve at least one of the technical problems existing in the related art. Therefore, an objective of the present application is to provide a pulverizer to address the problem that the pulverizer cannot meet the requirements of different pulverization sizes of materials.

Embodiments according to a first aspect of the present application provide a pulverizer, including: a support frame; a stator connected to the support frame, the stator having a stator pulverizing surface; and a rotor connected to the support frame, the rotor being rotatable, and the rotor having a rotor pulverizing surface; wherein the stator pulverizing surface is opposite the rotor pulverizing surface, a pulverizing chamber is formed between the stator pulverizing surface and the rotor pulverizing surface, and a distance between the stator pulverizing surface and the rotor pulverizing surface is adjustable.

In the embodiments of the present application, when it is necessary to pulverize materials with smaller particle sizes, the stator pulverizing surface can be adjusted to approach the rotor pulverizing surface to reduce the distance therebetween. When it is necessary to pulverize materials with larger particle sizes, the stator pulverizing surface can be adjusted to move away from the rotor pulverizing surface to increase the distance therebetween. Due to the adjustable distance between the stator pulverizing surface and the rotor pulverizing surface, the distance between the stator pulverizing surface and the rotor pulverizing surface can be adjusted according to the required particle size of materials, so that the pulverizer can produce pulverized materials with different particle sizes, and thus has a wider applicability.

In some embodiments, a distance between the stator and the support frame is adjustable. By defining the adjustable distance between the stator and the support frame, not only can the distance between the stator pulverizing surface and the rotor pulverizing surface be adjusted, but the distance between the rotor and the support frame can also be kept constant to ensure the rotation stability of the rotor during pulverizing.

In some embodiments, the pulverizer further includes: a first box connected to the stator; and a second box arranged opposite the first box, the second box being located between the first box and the support frame, and the second box being connected to the support frame; wherein the first box is connected to the second box, and a distance between the first box and the second box is adjustable in an arrangement direction X of the first box and the second box. In the embodiments of the present application, the distance between the stator and the support frame is adjusted by adjusting the distance between the first box and the second box, so as to adjust the distance between the stator pulverizing surface and the rotor pulverizing surface.

In some embodiments, the side of the first box facing the second box is provided with a mounting groove, the stator is located in the mounting groove, and the pulverizer further includes: a fixing ring located between the stator and the second box, wherein the fixing ring is fixedly connected to the surface of the first box facing the second box, a projection of an inner ring of the fixing ring on a first plane is inside a projection of the stator on the first plane, and a projection of an outer ring of the fixing ring on the first plane is outside the projection of the stator on the first plane; wherein the first plane is parallel to a connecting surface between the first box and the second box. In the embodiments of the present application, by providing the mounting groove and the fixing ring, it is convenient to mount and fix the stator to the first box.

In some embodiments, the surface of the first box facing the second box is provided with a fixing groove, an opening of the mounting groove runs through a bottom surface of the fixing groove, and the fixing ring is located in the fixing groove. In the embodiments of the present application, the mounting position of the fixing ring is defined by providing the fixing groove on the first box, so that the fixing ring is mounted at a designated position of the first box.

In some embodiments, the end surface of the stator facing the fixing ring is provided with a first limiting protrusion, the end surface of the fixing ring facing the stator is provided with a first limiting groove, and the first limiting protrusion is located in the first limiting groove. In the embodiments of the present application, the rotation of the stator relative to the first box can be limited by providing the first limiting protrusion and the first limiting groove to engage the stator in the fixing ring.

In some embodiments, the first box further includes: a housing, the mounting groove being located in the housing, and the mounting groove running through the end surface of the housing away from the second box; and an end cover for covering the end surface of the housing away from the second box, the end cover being detachably connected to the housing. In the embodiments of the present application, by configuring the first box such that the housing is detachably connected to the end cover, the end cover can be detached from the housing to detach and repair the stator located in the mounting groove, facilitating the subsequent maintenance.

In some embodiments, the end surface of the housing away from the second box is provided with an annular boss, and a projection of an inner ring of the annular boss on the first plane is located within a projection of an inner ring of the mounting groove on the first plane; and the end surface of the stator facing the annular boss is provided with a second limiting protrusion, the end surface of the annular boss facing the stator is provided with a second limiting groove, and the second limiting protrusion is located in the second limiting groove. In the embodiments of the present application, the stator is engaged in the annular boss by means of the second limiting protrusion and the second limiting groove, so that the rotation of the stator relative to the first box can be limited.

In some embodiments, the surface of the second box opposite the housing is provided with a plurality of threaded holes, the housing is provided with a plurality of connecting holes corresponding to the plurality of threaded connecting holes on a one-to-one basis, and the pulverizer further includes: a connecting rod, which runs through the connecting hole and is connected to the threaded hole; and an adjusting nut, which is located between the housing and the second box, the adjusting nut being threadedly connected to the connecting rod. In the embodiments of the present application, by providing the connecting holes, the threaded holes and the connecting rod, the second box is connected to the housing of the first box, and the distance between the second box and the housing is adjusted by means of the adjusting nut, so as to adjust the distance between the stator pulverizing surface and the rotor pulverizing surface, so that the adjustment is simple and feasible.

In some embodiments, the side of the first box away from the second box is provided with a feed opening, a discharge opening is formed between the first box and the second box, and the feed opening and the discharge opening are both in communication with the pulverizing chamber. In the embodiments of the present application, by providing the discharge opening and the feed opening, the materials can be fed and discharged during the pulverizing to realize continuous pulverization of the materials.

In some embodiments, the rotor is of a truncated conical structure, the rotor pulverizing surface is an outside surface of the rotor, the stator is internally provided with a truncated conical groove matching the shape of the rotor, an inside surface of the stator is the stator pulverizing surface, and the rotor is located in the truncated conical groove. In the embodiments of the present application, the stator and the rotor are respectively configured as a truncated conical structure and a truncated conical groove, and the side surfaces thereof are both inclined surfaces, so that the ground materials can move downwardly under the action of gravity and be conveniently discharged.

In some embodiments, the pulverizer satisfies at least one of the following conditions: a first included angle α between a generatrix and a bottom surface of the rotor is greater than or equal to 65° and less than or equal to 80°; and a second included angle β between a generatrix and a bottom surface of the truncated conical groove is greater than or equal to 65° and less than or equal to 80°. In the embodiments of the present application, by defining the range of the first included angle between the generatrix and the bottom surface of the stator and the range of the second included angle between the generatrix and the bottom surface of the truncated conical groove, the materials can be fully pulverized after entering the pulverizing chamber, and can also be removed smoothly.

In some embodiments, the second included angle is less than or equal to the first included angle. In the embodiments of the present application, when the second included angle is equal to the first included angle, the generatrix of the stator is parallel to the generatrix of the truncated conical groove, and the shapes of the stator and the rotor can form a good fit for material pulverization. When the second included angle is less than the first included angle, the distance between the stator and the rotor gradually decreases from top to bottom in a vertical direction, so that the materials can be coarsely pulverized in an upper part of the pulverizing chamber and finely pulverized in a lower part thereof.

In some embodiments, the rotor is provided with a plurality of rotor blades, and the rotor blades form the rotor pulverizing surface. In the embodiments of the present application, the rotor blades are arranged around the rotor to form the rotor pulverizing surface, which can cut the materials during the pulverizing of the materials, so that the materials are pulverized more fully.

In some embodiments, the plurality of rotor blades includes a first blade set and a second blade set, wherein the number of blades of the first blade set is less than the number of blades of the second blade set. In the embodiments of the present application, by providing the blade sets with different numbers of blades, the materials can be coarsely pulverized by the first blade set and finely pulverized by the second blade set, so as to achieve segmental pulverizing, providing a better pulverizing effect.

In some embodiments, a distance between the first blade set and the support frame is greater than a distance between the second blade set and the support frame. In the embodiments of the present application, the distance between the first blade set and the support frame is greater than the distance between the second blade set and the support frame, that is, the second blade set is located below the first blade set. Since the number of blades of the first blade set is less than the number of blades of the second blade set, the materials will automatically move to the second blade set for fine pulverizing under the action of gravity after being coarsely pulverized by the first blade set, so that the pulverizing process is more convenient.

In some embodiments, the stator is provided with a plurality of stator blades, the plurality of stator blades form the stator pulverizing surface, and the stator blade has a thickness greater than that of the rotor blade. In the embodiments of the present application, the thickness of the stator blade is set to be greater than that of the rotor blade, so that the stator blades are more wear-resistant during the pulverizing process and do not need to be replaced frequently.

In some embodiments, at least one of the rotor blade and the stator blade is a ceramic blade. In the embodiments of the present application, the rotor blade and the stator blade have a small amount of wear during the pulverizing, and, when being configured as ceramic blades, have little impact on the properties of the pulverized material because the ceramic blades are resistant to wear.

In some embodiments, the pulverizer further includes: a driving mechanism connected to the support frame, an output shaft of the driving mechanism being connected to the rotor. In the embodiments of the present application, the driving mechanism drives the rotor to rotate, and can also change the rotation speed of the rotor to speed up the pulverizing of the materials and improve the pulverizing efficiency.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### Description of Drawings

In the accompanying drawings, the same reference numerals denote the same or similar parts or elements throughout multiple drawings unless otherwise specified. These drawings are not necessarily drawn to scale. It should be understood that these drawings depict only some implementations according to the present disclosure herein and are not to be construed as limiting the scope of the present application. In order to more clearly illustrate the technical solutions of the embodiments of the present application, the drawings to be used in the description of the embodiments of the present application will be described briefly below. It will be apparent that the drawings in the following description are merely some embodiments of the present application. For those skilled in the art, other drawings can also be obtained according to these drawings without any creative effort.
Fig. 1 is a schematic structural view of a pulverizer according to some embodiments of the present application;
Fig. 2 is a cross-sectional view of a first box, a stator and a fixing ring according to some embodiments of the present application;
Fig. 3 is a schematic structural view of a stator according to some embodiments of the present application;
Fig. 4 is a schematic structural view of a rotor according to some embodiments of the present application;
Fig. 5 is a positional relationship diagram of a rotor and a stator according to some embodiments of the present application;
Fig. 6 is a positional relationship diagram of a rotor and a stator according to some other embodiments of the present application;
Fig. 7 is a top view of a rotor according to some embodiments of the present application;
Fig. 8 is a bottom view of a stator according to some embodiments of the present application;
Fig. 9 is an enlarged view of part A in Fig. 7; and
Fig. 10 is an enlarged view of part B in Fig. 8.

### Description of reference signs:

1. Support frame; 2. Stator; 3. Rotor; 4. First box; 5. Second box; 6. Fixing ring; 7. Connecting rod; 8. Adjusting nut; 9. Discharge opening; 10. Driving mechanism; 11. Pulley; 21. Stator pulverizing surface; 22. First limiting protrusion; 23. Second limiting protrusion; 24. Truncated conical groove; 25. Stator blade; 31. Rotor pulverizing surface; 32. Rotor blade; 321. First blade set; 322. Second blade set; 323. Third blade set; 41. Mounting groove; 411. Inner ring of the mounting groove; 42. Fixing groove; 43. Housing; 431. Annular boss; 4311. Inner ring of the annular boss; 4312. Second limiting groove; 432. Connecting hole; 44. End cover; 45. Feed opening; 46. First bolt; 47. Second bolt; 51. Threaded hole; 61. Inner ring of the fixing ring; 62. Outer ring of the fixing ring; 63. First limiting groove; α. First included angle; β. Second included angle.

### Detailed Description

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms " including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or location relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and the like are based on the orientation or location relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

At present, from the development of market situation, application of traction batteries is becoming more and more extensive. Power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

Some materials in the battery-related technology may be stored for a long time, and the materials will agglomerate due to temperature, humidity, pressure, etc., which is not conducive to subsequent processing.

Pulverizers can use the high-speed rotation of pulverizing blades to cut and impact the materials to achieve the pulverization of the materials. There are many types of pulverizers, such as hammer pulverizers and pressure mill pulverizers. The distance between a stator and a rotor of such pulverizers can be adjusted, so the pulverized materials have the same particle size, and the particle size of the pulverized materials is consistent.

Based on the above considerations, the present application provides a pulverizer. The pulverizer includes a support frame, a stator and a rotor. The stator and the rotor are both connected to the support frame. The stator has a stator pulverizing surface, the rotor has a rotor pulverizing surface, and the rotor is rotatable. The stator pulverizing surface is opposite the rotor pulverizing surface, a pulverizing chamber is formed between the stator pulverizing surface and the rotor pulverizing surface, and a distance between the stator pulverizing surface and the rotor pulverizing surface is adjustable. Due to the adjustable distance between the stator pulverizing surface and the rotor pulverizing surface, the distance therebetween can be adjusted according to the required particle size of materials, so that the pulverizer can change the particle size of the pulverized materials, and thus has a wider applicability.

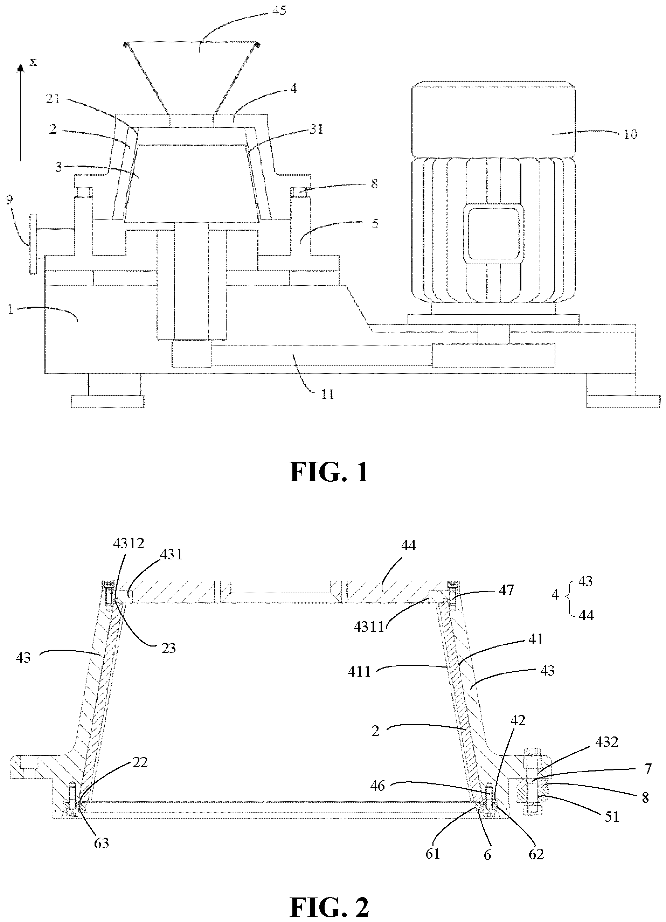

Embodiments of the present application provide a pulverizer. Fig. 1 is a schematic structural view of a pulverizer according to some embodiments of the present application. Referring to Fig. 1, the pulverizer includes a support frame 1, a stator 2 and a rotor 3. The stator 2 and the rotor 3 are both connected to the support frame 1. The stator 2 has a stator pulverizing surface 21, the rotor 3 has a rotor pulverizing surface 31, and the rotor 3 is rotatable. The stator pulverizing surface 21 is opposite the rotor pulverizing surface 31, a pulverizing chamber is formed between the stator pulverizing surface 21 and the rotor pulverizing surface 31, and a distance between the stator pulverizing surface 21 and the rotor pulverizing surface 31 is adjustable.

In the embodiments of the present application, the shapes and materials of the stator 2 and the rotor 3 are not limited. The stator 2 and the rotor 3 are arranged opposite each other, and the corresponding stator pulverizing surface 21 and rotor pulverizing surface 31 are also arranged opposite each other to form a pulverizing chamber, in which the materials are located and pulverized.

The materials to be pulverized are located in the pulverizing chamber, and the distance between the stator pulverizing surface 21 and the rotor pulverizing surface 31 determines the particle size of the pulverized materials. In the embodiments of the present application, due to the adjustable distance between the stator pulverizing surface 21 and the rotor pulverizing surface 31, and the distance between the stator 2 and the rotor 3 can be adjusted by adjusting the position of the stator 2 or by adjusting the position of the rotor 3.

In the embodiments of the present application, when it is necessary to pulverize materials with smaller particle sizes, the stator pulverizing surface 21 can be adjusted to approach the rotor pulverizing surface 31 to reduce the distance therebetween. When it is necessary to pulverize materials with larger particle sizes, the stator pulverizing surface 21 can be adjusted to move away from the rotor pulverizing surface 31 to increase the distance therebetween. Due to the adjustable distance between the stator pulverizing surface 21 and the rotor pulverizing surface 31, the distance between the stator pulverizing surface 21 and the rotor pulverizing surface 31 can be adjusted according to the required particle size of the materials, so that the pulverizer can produce pulverized materials with different particle sizes, and thus has a wider applicability.

According to some embodiments of the present application, a distance between the stator 2 and the support frame 1 is adjustable.

In the embodiments of the present application, the distance between the rotor 3 and the support frame 1 is fixed, and the distance between the stator pulverizing surface 21 and the rotor pulverizing surface 31 is adjusted by adjusting the distance between the stator 2 and the support frame 1.

In the embodiments of the present application, by defining the adjustable distance between the stator 2 and the support frame 1, not only can the distance between the stator pulverizing surface 21 and the rotor pulverizing surface 31 be adjusted, but the distance between the rotor 3 and the support frame 1 can also be kept constant to ensure the rotation stability of the rotor 3 during pulverizing.

According to some embodiments of the present application, referring to Fig. 1, the pulverizer further includes a first box 4 and a second box 5. The first box 4 is connected to the stator 2, the second box 5 is arranged opposite the first box 4, the second box 5 is located between the first box 4 and the support frame 1, and the second box 5 is connected to the support frame 1. The first box 4 is connected to the second box 5, and a distance between the first box 4 and the second box 5 is adjustable in an arrangement direction X of the first box 4 and the second box 5.

In some embodiments of the present application, the arrangement direction X of the first box 4 and the second box 5 may be the height direction of the first box 4 and the second box 5.

In an implementation according to the embodiments of the present application, the first box 4 and the stator 2 can be detachably connected to each other to facilitate subsequent maintenance. Moreover, when the stator 2 is damaged, the stator 2 can be detached and replaced without replacing the first box 4, saving resources.

In another implementation according to the embodiments of the present application, the first box 4 and the stator 2 may be non-detachably connected to each other, to improve the fastness of connection between the stator 2 and the first box 4.

In the embodiments of the present application, the stator 2 is connected to the first box 4, the first box 4 is connected to the second box 5, the second box 5 is connected to the support frame 1, and the stator 2 is thus connected to the support frame 1 by means of the first box 4 and the second box 5. The distance between the stator 2 and the support frame 1 is adjusted by adjusting the distance between the first box 4 and the second box 5.

In the embodiments of the present application, the distance between the stator 2 and the rotor 3 is adjusted by adjusting the distance between the first box 4 and the second box 5, so as to adjust the distance between the stator pulverizing surface 21 and the rotor pulverizing surface 31.

Fig. 2 is a cross-sectional view of a stator and a first box according to some embodiments of the present application. Referring to Fig. 2, the side of the first box 4 facing the second box 5 is provided with a mounting groove 41, the stator 2 is located in the mounting groove 41, and the pulverizer further includes a fixing ring 6. The fixing ring 6 is located between the stator 2 and the second box 5 (not shown in Fig. 2), the fixing ring 6 is fixedly connected to the surface of the first box 4 facing the second box 5, a projection of an inner ring 61 of the fixing ring 6 on a first plane is inside a projection of the stator 2 on the first plane, and a projection of an outer ring 62 of the fixing ring 6 on the first plane is outside the projection of the stator 2 on the first plane. The first plane is parallel to a connecting surface between the first box 4 and the second box 5.

In the embodiments of the present application, the mounting groove 41 is used to mount and accommodate the stator 2, and the shape and size of the stator 2 both match those of the mounting groove 41.

In the embodiments of the present application, the fixing ring 6 is located between the stator 2 and the second box 5, and the projections of the inner ring 61 and the outer ring 62 of the fixing ring 6 on the first plane are respectively located on the inner and outer sides of the projection of the stator 2 on the first plane, and the fixing ring 6 is fixedly connected to the surface of the first box 4 facing the second box 5. That is, a part of the fixing ring 6 abuts against the stator 2, and the other part thereof is fixed to the first box 4, so as to fix the stator 2 to the first box 4.

Illustratively, the material of the fixing ring 6 is not limited, and the fixing ring 6 may be connected to the first box 4 via a first bolt 46.

In the embodiments of the present application, by providing the mounting groove 41 and the fixing ring 6, it is convenient to mount and fix the stator 2 to the first box 4.

According to some embodiments of the present application, the surface of the first box 4 facing the second box 5 is provided with a fixing groove 42, an opening of the mounting groove 41 runs through a bottom surface of the fixing groove 42, and the fixing ring 6 is located in the fixing groove 42.

In the embodiments of the present application, the fixing groove 42 is used to mount and accommodate the fixing ring 6, and the shape and size of the fixing ring 6 located in the fixing groove 42 both match those of the fixing groove 42.

In the embodiments of the present application, the mounting position of the fixing ring 6 is defined by providing the fixing groove 42 on the first box 4, so that the fixing ring 6 is mounted at a designated position of the first box 4.

According to some embodiments of the present application, the end surface of the stator 2 facing the fixing ring 6 is provided with a first limiting protrusion 22, the end surface of the fixing ring 6 facing the stator 2 is provided with a first limiting groove 63, and the first limiting protrusion 22 is located in the first limiting groove 63.

In the embodiments of the present application, the shape of the first limiting protrusion 22 is not limited, for example, it may be a triangle, a rectangle, a trapezoid, etc. The specific number of first limiting protrusions 22 is not limited, and may be 1, 2, 3 or other numbers. A plurality of first limiting protrusions 22 may be evenly arranged along the circumference of the stator 2. The shape, size and number of the first limiting groove 63 all match those of the first limiting protrusion 22.

In the embodiments of the present application, the rotation of the stator 2 relative to the first box 4 can be limited by providing the first limiting protrusion 22 and the first limiting groove 63 to engage the stator in the fixing ring 6.

According to some embodiments of the present application, the first box 4 includes a housing 43 and an end cover 44. The mounting groove 41 is located in the housing 43 and runs through the end surface of the housing 43 away from the second box 5. The end cover 44 covers the end surface of the housing 43 away from the second box 5. The end cover 44 is detachably connected to the housing 43.

In the embodiments of the present application, the shape and size of the end cover 44 match those of the end surface of the housing 43 away from the second box 5.

In the embodiments of the present application, the detachable connection between the end cover 44 and the housing 43 may be a threaded connection, a key connection, a pin connection, etc.

Illustratively, the end cover 44 and the housing 43 may be connected to each other via a second bolt 47.

In the embodiments of the present application, by configuring the first box 4 such that the housing 43 is detachably connected to the end cover 44, the end cover 44 can be detached from the housing 43 to detach and repair the stator 2 located in the mounting groove 41, facilitating the subsequent maintenance.

According to some embodiments of the present application, the end surface of the housing 43 away from the second box 5 is provided with an annular boss 431, and a projection of an inner ring 4311 of the annular boss 431 on the first plane is located within a projection of an inner ring 411 of the mounting groove 41 on the first plane. The end surface of the stator 2 facing the annular boss 431 is provided with a second limiting protrusion 23, the end surface of the annular boss 431 facing the stator 2 is provided with a second limiting groove 4312, and the second limiting protrusion 23 is located in the second limiting groove 4312.

In the embodiments of the present application, the projection of the inner ring 4311 of the annular boss 431 on the first plane is located within the projection of the inner ring 411 of the mounting groove 41 on the first plane, that is, the end surface of the mounting groove 41 close to the annular boss 431 completely abuts against the annular boss 431.

In the embodiments of the present application, the shape of the second limiting protrusion 23 is not limited, for example, it may be a triangle, a rectangle, a trapezoid, etc. The specific number of second limiting protrusions 23 is not limited, and may be 1, 2, 3 or other numbers. A plurality of second limiting protrusions 23 are evenly arranged along the circumference of the stator 2. The shape, size and number of the second limiting groove 4312 all match those of the second limiting protrusion 23. The second limiting groove 4312 can define the rotation of the stator 2 relative to the first box 4, and may also be used as a positioning structure for mounting the stator 2.

In the embodiments of the present application, the stator is engaged in the annular boss 431 by means of the second limiting protrusion 23 and the second limiting groove 4312, so that the rotation of the stator 2 relative to the first box 4 can be limited.

According to some embodiments of the present application, referring to Fig. 2, the surface of the second box 5 opposite the housing 43 is provided with a plurality of threaded holes 51, the housing 43 is provided with a plurality of connecting holes 432 corresponding to the plurality of threaded holes 51 on a one-to-one basis, and the pulverizer further includes a connecting rod 7 and an adjusting nut 8. The connecting rod 7 runs through the connecting hole 432 and is connected to the threaded hole 51, the adjusting nut 8 is located between the housing 43 and the second box 5, and the adjusting nut 8 is threadedly connected to the connecting rod 7.

In the embodiments of the present application, the second box 5 is threadedly connected to the housing 43 of the first box 4, and the plurality of threaded holes 51 in the second box 5 correspond to the plurality of connecting holes 432 in the housing 43 on a one-to-one basis. The connecting hole 432 is configured as a through hole, and the connecting rod 7 can run through the connecting hole 432.

In the embodiments of the present application, the threaded hole 51 may be a through hole or a blind hole.

In the embodiments of the present application, by providing the connecting holes 432, the threaded holes 51 and the connecting rod 7, the second box 5 is connected to the housing 43 of the first box 4, and the distance between the second box 5 and the housing 43 is adjusted by means of the adjusting nut 8, so as to adjust the distance between the stator pulverizing surface 21 and the rotor pulverizing surface 31, so that the adjustment is simple and feasible.

According to some embodiments of the present application, referring to Fig. 1, the side of the first box 4 away from the second box 5 is provided with a feed opening 45, a discharge opening 9 is formed between the first box 4 and the second box 5, and the feed opening 45 and the discharge opening 9 are both in communication with the pulverizing chamber.

In the embodiments of the present application, the shapes and sizes of the feed opening 45 and the discharge opening 9 are not limited. The materials enter the pulverizing chamber from the feed opening 45, and are pulverized by the friction between the rotor and the stator and the materials, and the qualified materials are discharged through the discharge opening 9.

In the embodiments of the present application, by providing the discharge opening 9 and the feed opening 45, the materials can be fed and discharged during the pulverizing to realize continuous pulverization of the materials.

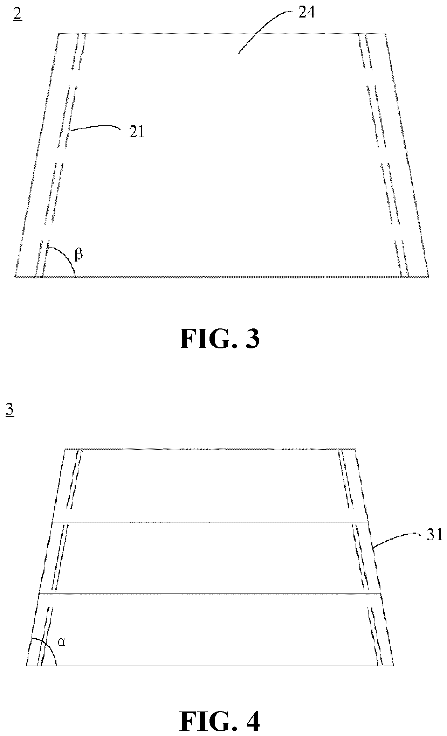

Fig. 3 is a schematic structural view of a stator according to some embodiments of the present application, and Fig. 4 is a schematic structural view of a rotor according to some embodiments of the present application. Referring to Figs. 3 and 4, the rotor 3 is of a truncated conical structure, the rotor pulverizing surface 31 is an outside surface of the rotor 3, the stator 2 is internally provided with a truncated conical groove 24 matching the shape of the rotor 3, an inside surface of the stator 2 is the stator pulverizing surface 21, and the rotor 3 is located in the truncated conical groove 24.

In the embodiments of the present application, an inclination angle of the inclined surface of the truncated conical structure of the rotor 3 and an inclination angle of the inclined surface of the truncated conical groove 24 of the stator 2 may be the same, or may have a slight size difference, so as not to affect the mutual matching between the rotor 3 and the stator 2.

In the embodiments of the present application, the stator 2 and the rotor 3 are respectively configured as a truncated conical structure and a truncated conical groove 24, and the side surfaces thereof are both inclined surfaces, so that the ground materials can move downwardly under the action of gravity and be conveniently discharged.

According to some embodiments of the present application, the pulverizer satisfies at least one of the following conditions: a first included angle α between a generatrix and a bottom surface of the rotor 3 is greater than or equal to 65° and less than or equal to 80°; and a second included angle β between a generatrix and a bottom surface of the truncated conical groove 24 is greater than or equal to 65° and less than or equal to 80°.

In the embodiments of the present application, when the first included angle α between the generatrix and the bottom surface of the rotor 3 is too large, the materials entering the pulverizing chamber will be removed from the pulverizing chamber due to gravity before being fully pulverized; and when the first included angle α between the generatrix and the bottom surface of the rotor 3 is small, the materials entering the pulverizing chamber are not easy to be discharged from the pulverizing chamber after being pulverized. It is suitable that the first included angle α between the generatrix and the bottom surface of the rotor 3 is greater than or equal to 65° and less than or equal to 80°. This is also applicable to the second included angle β between the generatrix and the bottom surface of the truncated conical groove 24.

In the embodiments of the present application, by defining the range of the first included angle α between the generatrix and the bottom surface of the rotor 3 and the range of the second included angle β between the generatrix and the bottom surface of the truncated conical groove 24, the materials can be fully pulverized after entering the pulverizing chamber, and can also be removed smoothly.

In the embodiments of the present application, when the rotor 3 is of a truncated conical structure and the stator 2 is provided with a truncated conical groove 24, the distance between the stator 2 and the rotor 3 is adjusted by means of the adjusting nut 8, and the distance between the outside surface (i.e., the stator pulverizing surface) of the stator 2 and the inside surface (i.e., the rotor pulverizing surface) of the rotor 3 can thus be adjusted.

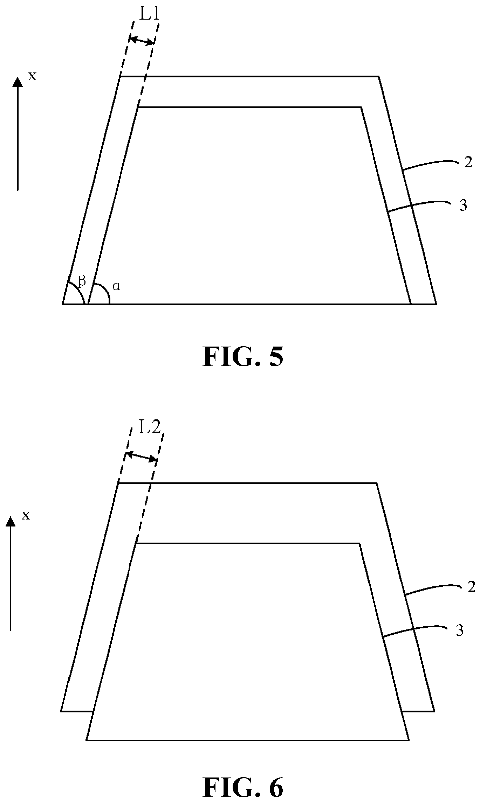

Fig. 5 is a positional relationship diagram of a rotor and a stator according to some embodiments of the present application, and Fig. 6 is a positional relationship diagram of a rotor and a stator according to some other embodiments of the present application. Referring to Figs. 5 and 6, the difference between Fig. 5 and Fig. 6 is that in Fig. 6, the stator 2 moves away from the rotor 3 by a certain distance in the arrangement direction X of the first box 4 (not shown in Fig. 6) and the second box 5 (not shown in Fig. 6). When the distance between the stator 2 and the rotor 3 is small, the distance between the stator pulverizing surface 21 and the rotor pulverizing surface 31 is L1; when the distance between the stator 2 and the rotor 3 is large, the distance between the stator pulverizing surface 21 and the rotor pulverizing surfaces 31 is L2, and L2 is greater than L1.

In some embodiments of the present application, the distance between the stator pulverizing surface 21 and the rotor pulverizing surface 31 is greater than or equal to 50 um and less than or equal to 5000 um.

According to some embodiments of the present application, the second included angle β is less than or equal to the first included angle α.

In some embodiments of the present application, the difference between the second included angle β and the first included angle α is greater than or equal to 0° and less than or equal to 2°, so as not to affect the mutual matching between the rotor 3 and the stator 2 if the difference is too large.

In the embodiments of the present application, when the second included angle β is equal to the first included angle α, the generatrix of the stator 2 is parallel to the generatrix of the truncated conical groove 24, and the shapes of the stator 2 and the rotor 3 can form a good fit for material pulverizing. When the second included angle β is less than the first included angle α, the distance between the stator 2 and the rotor 3 gradually decreases from top to bottom in a vertical direction, so that the materials can be coarsely pulverized in an upper part of the pulverizing chamber and finely pulverized in a lower part thereof.

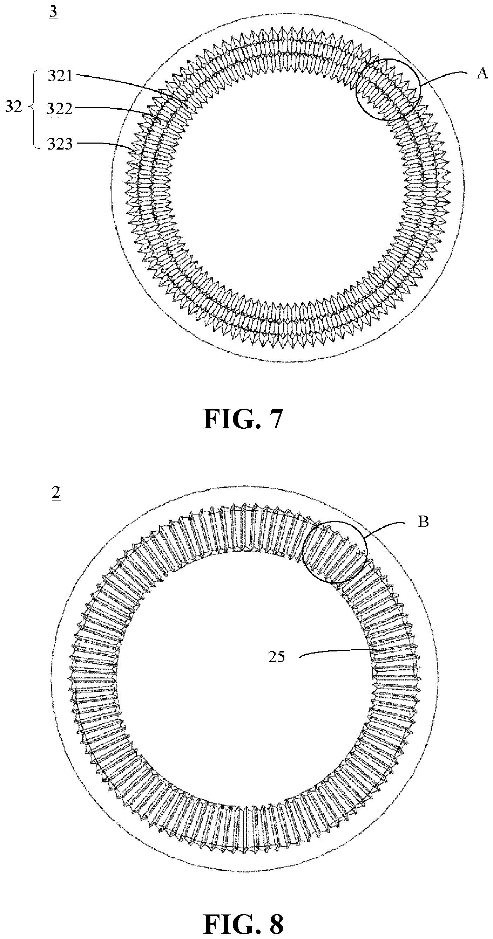

Fig. 7 is a top view of a rotor according to some embodiments of the present application. Referring to Figs. 4 and 7, the rotor 3 is provided with a plurality of rotor blades 32, and the rotor blades 32 form the rotor pulverizing surface 31.

In the embodiments of the present application, the material of the rotor blade 32 is not limited, and may be steel, ceramic, etc. The number of rotor blades 32 is also not limited. The rotor blades 32 surround the rotor 3 to form the rotor pulverizing surface 31. When the number of rotor blades 32 is large, the distribution thereof is dense, and when the number of rotor blades 32 is small, the distribution thereof is sparse.

In the embodiments of the present application, the rotor blades 32 are arranged around the rotor 3 to form the rotor pulverizing surface 31, which can cut the materials during the pulverizing of the materials, so that the materials are pulverized more fully.

According to some embodiments of the present application, the plurality of rotor blades 32 includes a first blade set 321 and a second blade set 322. The number of blades of the first blade set 321 is less than the number of blades of the second blade set 322.

In the embodiments of the present application, the number of blades of the first blade set 321 is small so that the materials are coarsely pulverized when passing through the first blade set 321, and the number of blades of the second blade set 322 is large so that the materials are finely pulverized when passing through the second blade set 322.

In some embodiments of the present application, the plurality of rotor blades 32 may further include a third blade set 323. The number of blades of the third blade set 323 may be equal to the number of blades of the second blade set 322, or may be greater than the number of blades of the second blade set 322.

Illustratively, the number of blades of the first blade set 321 is greater than or equal to 80 and less than or equal to 100, the number of blades of the second blade set 322 is greater than or equal to 100 and less than or equal to 150, and the number of blades of the third blade set 323 is greater than or equal to 100 and less than or equal to 150.

In the embodiments of the present application, by providing the blade sets with different numbers of blades, the materials can be coarsely pulverized by the first blade set 321 and finely pulverized by the second blade set 322. Segmental pulverizing is therefore realized, and the pulverizing effect is better.

According to some embodiments of the present application, a distance between the first blade set 321 and the support frame 1 is greater than a distance between the second blade set 322 and the support frame 1.

Illustratively, the first blade set 321 is closer to the smaller diameter end of the truncated conical groove 24 than the second blade set 322, and the second blade set 322 is closer to the larger diameter end of the truncated conical groove 24 than the first blade set 321. The materials enter the pulverizing chamber from the smaller diameter end of the truncated conical groove 24 for coarse pulverizing, and then move to the larger diameter end of the truncated conical groove 24 for fine pulverizing.

In the embodiments of the present application, the distance between the first blade set 321 and the support frame 1 is greater than the distance between the second blade set 322 and the support frame 1, that is, the second blade set 322 is located below the first blade set 321. Since the number of blades of the first blade set 321 is less than the number of blades of the second blade set 322, the materials will automatically move to the second blade set 322 for fine pulverizing under the action of gravity after being coarsely pulverized by the first blade set 321, so that the pulverizing process is more convenient.

Fig. 8 is a bottom view of a stator according to some embodiments of the present application. Referring to Figs. 3 and 8, the stator 2 is provided with a plurality of stator blades 25, and the plurality of stator blades 25 form the stator pulverizing surface 21 (not shown in Fig. 8). The stator blade 25 has a thickness greater than that of the rotor blade 32.

In the embodiments of the present application, the material of the stator blade 25 is not limited, and may be steel, ceramic, etc. The number of stator blades 25 is also not limited. The stator blades 25 surround the inside of the first box to form the stator pulverizing surface 21. When the number of stator blades 25 is large, the distribution thereof may be dense, and when the number of stator blades 25 is small, the distribution thereof may be sparse.

In the embodiments of the present application, the thickness of the stator blade 25 is set to be greater than that of the rotor blade 32, so that the stator blades 25 are more wear-resistant during the pulverizing process and do not need to be replaced frequently.

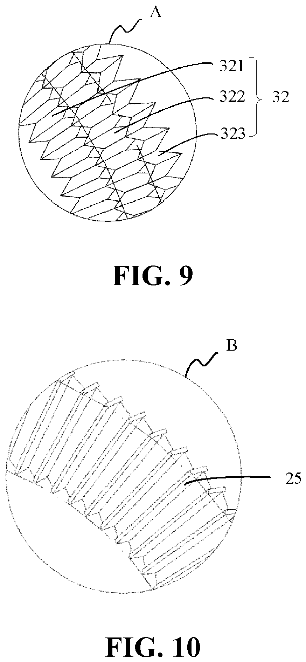

Fig. 9 is an enlarged view of part A in Fig. 7, and Fig. 10 is an enlarged view of part B in Fig. 8. Referring to Figs. 9 and 10, at least one of the rotor blade 32 and the stator blade 25 is a ceramic blade.

In the embodiments of the present application, it is possible that the rotor blade 32 is a ceramic blade, or the stator blade 25 is a ceramic blade, or the rotor blade 32 and the stator blade 25 are both ceramic blades.

In the embodiments of the present application, the rotor blade 32 and the stator blade 25 have a small amount of wear during the pulverizing of the materials, and, when being configured as ceramic blades, have little impact on the properties of the pulverized material because the ceramic blades are not easy to wear.

According to some embodiments of the present application, the pulverizer further includes a driving mechanism 10. The driving mechanism 10 is connected to the support frame 1, and an output shaft of the driving mechanism 10 is connected to the rotor 3.

In the embodiments of the present application, the driving mechanism 10 may be an electric motor.

Illustratively, the driving mechanism 10 may be connected to the rotor 3 via a pulley 11.

In the embodiments of the present application, the driving mechanism 10 drives the rotor 3 to rotate, and can also change the rotation speed of the rotor 3 to speed up the pulverizing of the materials and improve the pulverizing efficiency.

The embodiments of the present application provide a pulverizer, including a support frame 1, a stator 2, a rotor 3, a first box 4, a second box 5, a fixing ring 6, a connecting rod 7 and an adjusting nut 8, and a driving mechanism 10.

The stator 2 is connected to the first box 4, and the stator 2 is internally provided with a truncated conical groove 24 matching the shape of the rotor 3. An inside surface of the stator 2 is a stator pulverizing surface 21, and a plurality of stator blades 25 form the stator pulverizing surface 21. The stator blade 25 is a ceramic blade, and the thickness of the stator blade 25 is greater than that of the rotor blade 32.

The rotor 3 is connected to the second box 5, and the rotor 3 is of a truncated conical structure. The rotor 3 is provided with a plurality of rotor blades 32, the rotor blades 32 form a rotor pulverizing surface 31, and a pulverizing chamber is formed between the stator pulverizing surface 21 and the rotor pulverizing surface 31. The plurality of rotor blades 32 include a first blade set 321, a second blade set 322 and a third blade set 323. The number of blades of the first blade set 321 is less than the number of blades of the second blade set 322 and the number of blades of the third blade set 323. The rotor blades 32 are ceramic blades.

The first box 4 includes a housing 43 and an end cover 44. The housing 43 is detachably connected to the end cover 44 via a second bolt 47, and the end surface of the housing 43 away from the second box 5 is provided with an annular boss 431. The side of the first box 4 facing the second box 5 is provided with a mounting groove 41, the mounting groove 41 is located in the housing 43, and the stator 2 is located in the mounting groove 41. The surface of the first box 4 facing the second box 5 is provided with a fixing groove 42, an opening of the mounting groove 41 runs through a bottom surface of the fixing groove 42, and the fixing ring 6 is located in the fixing groove 42. The side of the first box 4 away from the second box is provided with a feed opening 45, a discharge opening 9 is formed between the first box 4 and the second box 5, and the feed opening 45 and the discharge opening 9 are both in communication with the pulverizing chamber.

The second box 5 is arranged opposite the first box 4, and the second box 5 is connected to the support frame 1. The surface of the second box 5 opposite the housing 43 is provided with a plurality of threaded holes 51, and the housing 43 is provided with a plurality of connecting holes 432 corresponding to the plurality of threaded holes 51 on a one-to-one basis. The connecting rod 7 runs through the connecting hole 432 and is connected to the threaded hole 51. The adjusting nut 8 is located between the housing 43 and the second box 5, and the adjusting nut 8 is threadedly connected to the connecting rod 7. The adjusting nut 8 can adjust the distance between the housing 43 and the second box 5.

The fixing ring 6 is located, between the stator 2 and the second box 5, in the fixing groove 42 of the first box 4, and the fixing ring 6 is fixedly connected to the surface of the first box 4 facing the second box 5 via a first bolt 46.

The end surface of the stator 2 facing the fixing ring 6 is provided with a first limiting protrusion 22, the end surface of the fixing ring 6 facing the stator 2 is provided with a first limiting groove 63, and the first limiting protrusion 22 is located in the first limiting groove 63. The end surface of the stator 2 facing the annular boss 431 is provided with a second limiting protrusion 23, the end surface of the annular boss 431 facing the stator 2 is provided with a second limiting groove 4312, and the second limiting protrusion 23 is located in the second limiting groove 4312.

The driving mechanism 10 is connected to the support frame 1, and the driving mechanism 10 is connected to the rotor 3 via a pulley 11.

The pulverizer provided in the embodiments of the present application can be used to pulverize a positive electrode material in the battery.

For example, the positive electrode material may be NEF-2.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments can still be modified, or some or all of the technical features therein can be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A pulverizer, comprising:
a support frame (1);
a stator (2) connected to the support frame (1), the stator (2) having a stator pulverizing surface (21); and
a rotor (3) connected to the support frame (1), the rotor (3) being rotatable, and the rotor (3) having a rotor pulverizing surface (31);
wherein the stator pulverizing surface (21) is opposite the rotor pulverizing surface (31), a pulverizing chamber is formed between the stator pulverizing surface (21) and the rotor pulverizing surface (31), and a distance between the stator pulverizing surface (21) and the rotor pulverizing surface (31) is adjustable.

2. The pulverizer according to claim 1, wherein a distance between the stator (2) and the support frame (1) is adjustable.

3. The pulverizer according to claim 1 or 2, further comprising:
a first box (4) connected to the stator (2); and
a second box (5) arranged opposite the first box (4), the second box (5) being located between the first box (4) and the support frame (1), and the second box (5) being connected to the support frame (1);
wherein the first box (4) is connected to the second box (5), and a distance between the first box (4) and the second box (5) is adjustable in an arrangement direction X of the first box (4) and the second box (5).

4. The pulverizer according to claim 3, wherein the side of the first box (4) facing the second box (5) is provided with a mounting groove (41), the stator (2) is located in the mounting groove (41), and the pulverizer further comprises:
a fixing ring (6) located between the stator (2) and the second box (5), wherein the fixing ring (6) is fixedly connected to the surface of the first box (4) facing the second box (5), a projection of an inner ring (61) of the fixing ring (6) on a first plane is inside a projection of the stator (2) on the first plane, and a projection of an outer ring (62) of the fixing ring (6) on the first plane is outside the projection of the stator (2) on the first plane;
wherein the first plane is parallel to a connecting surface between the first box (4) and the second box (5).

5. The pulverizer according to claim 4, wherein the surface of the first box (4) facing the second box (5) is provided with a fixing groove (42), an opening of the mounting groove (41) runs through a bottom surface of the fixing groove (42), and the fixing ring (6) is located in the fixing groove (42).

6. The pulverizer according to claim 4 or 5, wherein the end surface of the stator (2) facing the fixing ring (6) is provided with a first limiting protrusion (22), the end surface of the fixing ring (6) facing the stator (2) is provided with a first limiting groove (63), and the first limiting protrusion (22) is located in the first limiting groove (63).

7. The pulverizer according to any one of claims 4 to 6, wherein the first box (4) further comprises:
a housing (43), the mounting groove (41) being located in the housing (43), and the mounting groove (41) running through the end surface of the housing (43) away from the second box (5); and
an end cover (44) for covering the end surface of the housing (43) away from the second box (5), the end cover (44) being detachably connected to the housing (43).

8. The pulverizer according to claim 7, wherein the end surface of the housing (43) away from the second box (5) is provided with an annular boss (431), and a projection of an inner ring (4311) of the annular boss (431) on the first plane is located within a projection of an inner ring (411) of the mounting groove (41) on the first plane; and
the end surface of the stator (2) facing the annular boss (431) is provided with a second limiting protrusion (23), the end surface of the annular boss (431) facing the stator (2) is provided with a second limiting groove (4312), and the second limiting protrusion (23) is located in the second limiting groove (4312).

9. The pulverizer according to claim 7 or 8, wherein the surface of the second box (5) opposite the housing (43) is provided with a plurality of threaded holes (51), the housing (43) is provided with a plurality of connecting holes (432) corresponding to the plurality of threaded holes (51) on a one-to-one basis, and the pulverizer further comprises:
a connecting rod (7), which runs through the connecting hole (432) and is connected to the threaded hole (51); and
an adjusting nut (8), which is located between the housing (43) and the second box (5), the adjusting nut (8) being threadedly connected to the connecting rod (7).

10. The pulverizer according to any one of claims 3 to 9, wherein the side of the first box (4) away from the second box (5) is provided with a feed opening (45), a discharge opening (9) is formed between the first box (4) and the second box (5), and the feed opening (45) and the discharge opening (9) are both in communication with the pulverizing chamber.

11. The pulverizer according to any one of claims 1 to 10, wherein the rotor (3) is of a truncated conical structure, the rotor pulverizing surface (31) is an outside surface of the rotor (3), the stator (2) is internally provided with a truncated conical groove (24) matching the shape of the rotor (3), an inside surface of the stator (2) is the stator pulverizing surface (21), and the rotor (3) is located in the truncated conical groove (24).

12. The pulverizer according to claim 11, wherein the pulverizer satisfies at least one of the following conditions:
a first included angle α between a generatrix and a bottom surface of the rotor (3) is greater than or equal to 65° and less than or equal to 80°; and
a second included angle β between a generatrix and a bottom surface of the truncated conical groove (24) is greater than or equal to 65° and less than or equal to 80°.

13. The pulverizer according to claim 12, wherein the second included angle β is less than or equal to the first included angle α.

14. The pulverizer according to any one of claims 1 to 13, wherein the rotor (3) is provided with a plurality of rotor blades (32), and the rotor blades (32) form the rotor pulverizing surface (31).

15. The pulverizer according to claim 14, wherein the plurality of rotor blades (32) comprises a first blade set (321) and a second blade set (322), wherein the number of blades of the first blade set (321) is less than the number of blades of the second blade set (322).

16. The pulverizer according to claim 15, wherein a distance between the first blade set (321) and the support frame (1) is greater than a distance between the second blade set (322) and the support frame (1).

17. The pulverizer according to any one of claims 14 to 16, wherein the stator (2) is provided with a plurality of stator blades (25), the plurality of stator blades (25) form the stator pulverizing surface (21), and the stator blade (25) has a thickness greater than that of the rotor blade (32).

18. The pulverizer according to claim 17, wherein at least one of the rotor blade (32) and the stator blade (25) is a ceramic blade.

19. The pulverizer according to any one of claims 1 to 18, further comprising:
a driving mechanism (10) connected to the support frame (1), an output shaft of the driving mechanism (10) being connected to the rotor (3).
